# EUROPÄISCHE PATENTSCHRIFT

(11) **EP 3 480 232 B1**
(45) Veröffentlichungstag und Bekanntmachung des Hinweises auf die Patenterteilung: **01.02.2023**
(21) Anmeldenummer: 18203914.9
(22) Anmeldetag: 01.11.2018
(51) Int. Cl.: C08G 18/48, C08G 18/71, C08G 18/73, C08G 18/83, C08K 5/09, C09J 183/04

(54) **VERWENDUNG VON ADDITIVEN ZUR ERHÖHUNG DER ZUGSCHERFESTIGKEIT UND ZUSAMMENSETZUNG ENTHALTEND EIN SILANFUNKTIONALISIERTES PRÄPOLYMER UND ADDITIVE**
USE OF ADDITIVES TO INCREASE THE SHEAR STRENGTH AND COMPOSITION CONTAINING A SILANE FUNCTIONALIZED PREPOLYMER AND ADDITIVES
UTILISATION D'ADDITIFS DESTINÉE À AUGMENTER LA RÉSISTANCE À LA TRACTION ET AU CISAILLEMENT ET COMPOSITION CONTENANT UN PRÉPOLYMÈRE FONCTIONNALISÉ AU SILANE ET DES ADDITIFS

(30) Priorität: 07.11.2017 DE 102017219755
(43) Veröffentlichungstag der Anmeldung: 08.05.2019
(73) Patentinhaber: Bona GmbH Deutschland, 65549 Limburg an der Lahn (DE)
(72) Erfinder: Wickel, Holger, 35781 Weilburg (DE)
(74) Vertreter: Schweitzer, Klaus

(56) Entgegenhaltungen:
- EP-A1- 2 103 648
- EP-B1- 2 178 963
- DE-A1-102012 223 422
- US-A1- 2012 277 373

## Beschreibung

Die vorliegende Erfindung betrifft die Verwendung von Additiven zur Erhöhung der Zugscherfestigkeit von Zusammensetzungen enthaltend ein silanfunktionalisiertes Präpolymer und Additive.

Silanbasierte Kleb- und Dichtstoffe als solche sind bekannt. Einen allgemeinen Überblick über silanbasierte Kleb- und Dichtstoffe findet man z.B. in Bodo Müller u. Walter Rath, "Formulierung von Kleb- und Dichtstoffen", Hannover: Vincentz Network, 3. Aufl., 2015. Eine Formulierung für einen Parkettklebstoff findet man in H. Kittel, "Lehrbuch der Lacke und Beschichtungen", Stuttgart: S. Hirzel Verlag, 2. Auflage, 2005, Band 7 (Band.-Hrsg.: Horst Reul), "Produkte für das Bauwesen, Beschichtungen, Bauklebstoffe, Dichtstoffe". Auf S.355 ff dieses Bandes beschreibt Roland Krieger in Kapitel 7.10 Bauklebstoffe. Im gleichen Band werden auf S.490 ff von Christoph Hollbeck in Kapitel 7.11.2.2.2 Dichtstoffmassen auf Basis von MS-Polymeren (Produkte der Fa. Kaneka) beschrieben.

Kleb- und Dichtstoffe müssen gewisse Anforderungen erfüllen. Eine wichtige Eigenschaft von Kleb- und Dichtstoff-Zusammensetzungen ist, dass diese im ausgehärteten Zustand eine angemessene, häufig hohe, frühe Festigkeit besitzen.

Das Europäische Patent EP 2103 648 A1 offenbart eine feuchtigkeitshärtbare Zusammensetzung, geeignet für elastische Klebstoffe, Dichtstoffe und Beschichtungen, enthaltend ein silanterminiertes Präpolymer P1 und einen Weichmacher W.

Die US 2012/277373 A1 offenbart Zusammensetzungen für Klebstoffe, Dichtstoffe und Beschichtungen, enthaltend feuchtigkeitshärtende silanfunktionelle Polyurethane und Salizylsäure.

Die DE 10 2011 007 504 A1 beschreibt vernetzbare Polyurethanzusammensetzungen, in denen eine retardierende Substanz verwendet wird. Diese retardierende Substanz soll bewirken, dass in einer sogenannten Induktionsphase die katalytische Reaktivität des Katalysators vermindert ist und somit eine Verarbeitung der Zusammensetzung über einen gewissen Zeitraum erlaubt. Als retardierende Substanzen werden cyclische α-Hydroxyketone oder Triphenole mit drei benachbarten OH-Gruppen verwendet. Dieses Dokument geht jedoch nicht darauf ein, welchen Einfluss die retardierenden Substanzen auf die Festigkeit der ausgehärteten Zusammensetzung haben.

Die Aufgabe der vorliegenden Erfindung ist es die Zugscherfestigkeit von ausgehärteten Zusammensetzungen, basieren auf silanfunktionalisierten Präpolymeren zu verbessern.

Die vorliegende Erfindung betrifft die Verwendung einer Verbindung der Formel (I) 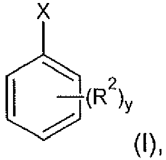 zur Verbesserung der Zugscherfestigkeit von ausgehärteten Zusammensetzungen, basierend auf silanmodifizierten Präpolymeren,
wobei X ausgewählt ist aus der Gruppe bestehend aus -H, Resten mit 1 bis 12 C-Atomen, und einem Substituenten -C(=O)-R¹, wobei R¹ ausgewählt ist aus der Gruppe bestehend aus -OH, und Resten mit 1 bis 25 C-Atomen, und
wobei y = 5 ist und die Reste R² gleich oder verschieden sind und ausgewählt sind aus der Gruppe bestehend aus -H, -OH und Resten mit 1 bis 12 C-Atomen.

Weiterhin kann X eine OH-Gruppe darstellen.

Es wurde überraschend gefunden, dass Zusammensetzungen, die Additive in Form einer Verbindung gemäß der Formel (I) enthalten, eine erhöhte Zugscherfestigkeit im ausgehärteten Zustand aufweisen verglichen mit einer Zusammensetzung, die keine Verbindung der Formel (I) enthält.

Als Reste mit 1 bis 12 C-Atomen kommen für X und R² Reste in Betracht, die ausgewählt sind aus der Gruppe umfassend substituierte und unsubstituierte, lineare und verzweigte C1 bis C12 Alkylgruppen, bevorzugt C1 bis C8 Alkylgruppen, besonders bevorzugt C1 bis C3 Alkylgruppen, substituierte und unsubstituierte, lineare und verzweigte C1 bis C12 Alkenylgruppen, bevorzugt C1 bis C8 Alkenylgruppen, besonders bevorzugt C1 bis C3 Alkenylgruppen, substituierte und unsubstituierte, lineare und verzweigte C1 bis C12 Alkynylgruppen, bevorzugt C1 bis C8 Alkynylgruppen, besonders bevorzugt C1 bis C3 Alkynylgruppen, substituierte und unsubstituierte, lineare und verzweigte C1 bis C12 Alkoxygruppen, bevorzugt C1 bis C8 Alkoxygruppen, besonders bevorzugt C1 bis C3 Alkoxygruppen, cyclische Alkylgruppen mit 5 bis 8 C-Atomen, bevorzugt 5 bis 6 C-Atomen, cyclische Alkenylreste mit 5 bis 8 C-Atomen, bevorzugt 5 bis 6 C-Atomen.

Als Reste mit 1 bis 25 C-Atomen kommen für R¹ Reste in Betracht, die ausgewählt sind aus der Gruppe umfassend substituierte und unsubstituierte, lineare und verzweigte C1 bis C25 Alkylgruppen, bevorzugt C1 bis C12 Alkylgruppen, besonders bevorzugt C1 bis C8 Alkylgruppen, substituierte und unsubstituierte, lineare und verzweigte C1 bis C25 Alkenylgruppen, bevorzugt C1 bis C12 Alkenylgruppen, besonders bevorzugt C1 bis C8 Alkenylgruppen, substituierte und unsubstituierte, lineare und verzweigte C1 bis C25 Alkynylgruppen, bevorzugt C1 bis C12 Alkynylgruppen, besonders bevorzugt C1 bis C8 Alkynylgruppen, substituierte und unsubstituierte, lineare und verzweigte C1 bis C25 Alkoxygruppen, bevorzugt C1 bis C12 Alkoxygruppen, besonders bevorzugt C1 bis C8 Alkoxygruppen, cyclische Alkylgruppen mit 5 bis 8 C-Atomen, bevorzugt 5 bis 6 C-Atomen, cyclische Alkenylreste mit 5 bis 8 C-Atomen, bevorzugt 5 bis 6 C-Atomen. R¹ umfasst weiterhin Reste die aus mehreren cyclischen Alkoxyalkenyleinheiten aufgebaut sind, wobei diese weitere Hydroxy- und/oder Alkoxysubstituenten sowie aromatische Carbonsäurederivate als Substituenten aufweisen können. Ein Beispiel für eine solche Verbindung ist Tannin.

Gemäß der vorliegenden Erfindung ist es bevorzugt, dass mindestens einer der Reste R² eine OH-Gruppe ist. Besonders bevorzugt stellen mindestens zwei der Reste R² eine OH-Gruppe dar.

Weiterhin ist es bevorzugt, dass die Reste R² gleich oder verschieden sind und eine OH-Gruppe oder ein H-Atom darstellen. Folglich betrifft die vorliegende Erfindung die Verwendung einer Verbindung der Formel (I) zur Verbesserung der Zugscherfestigkeit von ausgehärteten Zusammensetzungen, basierend auf silanmodifizierten Präpolymere, wobei einer der Reste R² eine OH-Gruppe darstellt und vier Reste R² ein H-Atom darstellen oder zwei der Reste R² eine OH-Gruppe darstellen und drei der Reste R² ein H-Atom darstellen oder drei der Reste R² eine OH-Gruppe darstellen und zwei der Reste R² ein H-Atom darstellen oder vier der Reste R² eine OH-Gruppe darstellt und einer der Reste R² ein H-Atom darstellt oder alle fünf Reste R² eine OH-Gruppe darstellen. Bevorzugt stellen unter diesem Ausführungsformen zwei der Reste R² eine OH-Gruppe dar und drei der Reste R² stellen ein H-Atom dar oder drei der Reste R² stellen eine OH-Gruppe darstellen und zwei der Reste R² stellen ein H-Atom dar.

Bevorzugt ist X ein Substituent -C(=O)-R¹. In diesem Fall ist es bevorzugt, dass R¹ eine OH-Gruppe darstellt und mindestens einer der Reste R² eine OH-Gruppe darstellt, wobei die übrigen Reste R² ein H-Atom darstellen. Besonders bevorzugt stellt R¹ eine OH-Gruppe dar, zwei der Reste R² stellen eine OH-Gruppe dar und drei der Reste R² stellen ein H-Atom dar.

Bevorzugte Verbindungen der Formel (I) sind 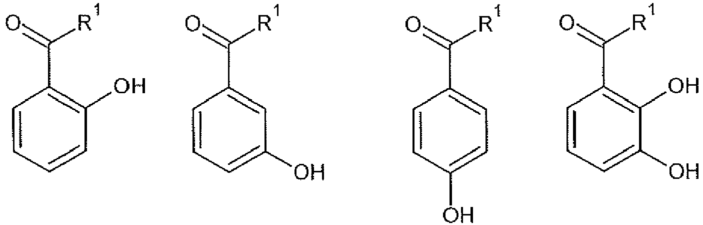 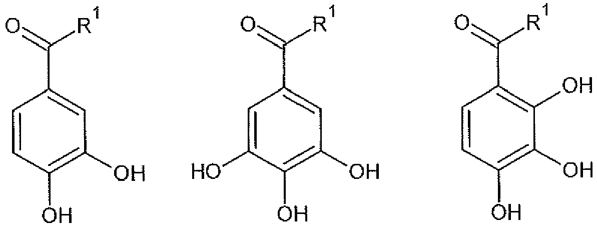 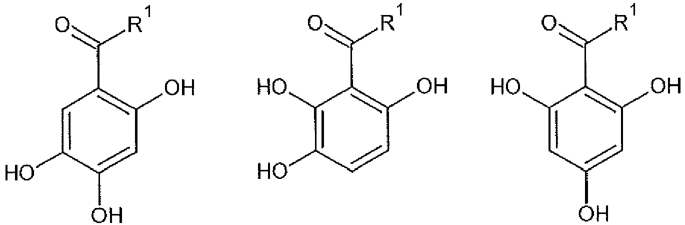 wobei R¹ bevorzugt eine OH-Gruppe, eine C1 bis C12 Alkylgruppe, bevorzugt eine C1 bis C8 Alkylgruppe, besonders bevorzugt eine C1 bis C3 Alkylgruppe, eine C1 bis C12 Alkoxygruppe, bevorzugt eine C1 bis C8 Alkoxygruppe, besonders bevorzugt eine C1 bis C3 Alkoxygruppe oder ein H-Atom darstellt, ganz besonders bevorzugt eine OH-Gruppe.

Gemäß der vorliegenden Erfindung ist bevorzugt, dass wenn zwei der Reste R² eine OH-Gruppe darstellen, sich die zwei OH-Gruppen an benachbarten C-Atomen befinden.

Somit betrifft die vorliegende Erfindung die Verwendung einer Verbindung der Formel (I) zur Verbesserung der Zugscherfestigkeit von ausgehärteten Zusammensetzungen, basierend auf silanmodifizierten Präpolymeren, wobei zwei der Reste R² OH-Gruppen darstellen und sich die beiden OH-Gruppen an benachbarten C-Atomen befinden.

Wenn drei der Reste R² eine OH-Gruppe darstellen und zwei der Reste R² ein H-Atom darstellen, ist es bevorzugt, dass sich mindestens zwei OH-Gruppen an benachbarten C-Atomen befinden. Gemäß einer Ausführungsform der Erfindung, stellen drei der Reste R² eine OH-Gruppe dar, wobei sich alle drei OH-Gruppen an benachbarten C-Atomen befinden. Gemäß einer weiteren Ausführungsform der Erfindung, stellen drei der Reste R² eine OH-Gruppe dar, wobei sich nur zwei der drei OH-Gruppen an benachbarten C-Atomen befinden.

Besonders bevorzugte Verbindungen der Formel (I) sind

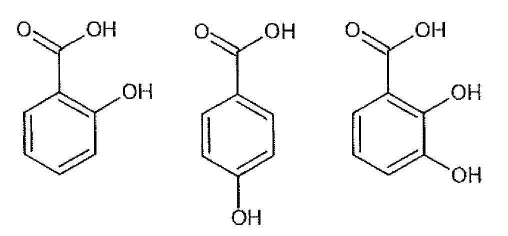

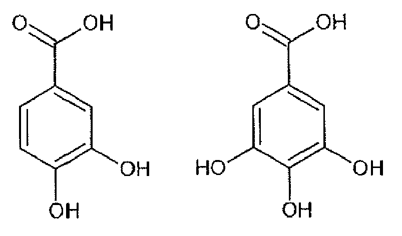

Silanfunktionalisierte Präpolymere, die sich für die Zwecke der vorliegenden Erfindung eignen sind beispielsweise beschrieben in der EP-A-2 657 211, auf die an dieser Stelle ausdrücklich Bezug genommen wird. Hierbei handelt es sich um silanfunktionalisierte Präpolymere der Formel (II) 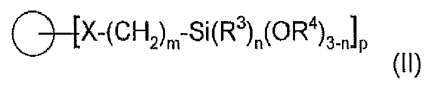 wobei
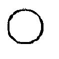 ein Polymer mit einem Molekulargewicht Mw von 1000 bis 50000, bevorzugt 1000 bis 20000 und besonders bevorzugt 4000 bis 20000 ist,
R³ C₁-C₅-Alkyl oder C₆-C₁₀-Aryl, bevorzugt Methyl, Ethyl oder Phenyl,
R⁴ C₁-C₄-Alkyl, bevorzugt Methyl oder Ethyl und
X -O-, -(CH2)m-O-, -O-CO-NR-, 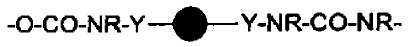 oder 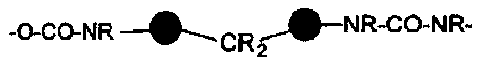 bedeutet, oder wobei X zusammen mit zwei benachbarten C-Atomen des Rückgrads des Polymers 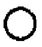 " einen C₅ oder C₆-Ring bildet und wobei
R gleich oder verschieden ist und H, C₁-C₅-Alkyl, Phenyl oder den Rest eines Michael-Akzeptors bedeutet,
Y gleich oder verschieden ist und lineares oder verzweigtes C₁-C₈-Alkylen (bevorzugt Methylen) oder eine Einfachbindung zwischen N und 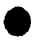 ist und
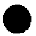 unsubstituiertes oder mit C₁-C₃-Alkyl, bevorzugt Methyl, 1-, 2- oder 3-fach substituiertes Phenylen, Naphtylen, Cyclohexylen oder C₄-C₁₀-n-Alkylen bedeutet
und
m gleich oder verschieden ist und eine ganze Zahl von 1 bis 8, bevorzugt 1 bis 4, besonders bevorzugt 1 bis 3
n eine ganze Zahl von 0 bis 2, bevorzugt 0 oder 1, besonders bevorzugt 0, und
p eine ganze Zahl von 1 bis 50, bevorzugt 2 bis 4, besonders bevorzugt 2 bis 3 oder für den Fall, dass X -(CH₂)ₘ-O- ist oder X mit zwei benachbarten C-Atomen des Rückgrads des Polymers 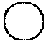 einen C₅- oder C₆-Ring bildet, 1 bis 100, bevorzugt 5 bis 10 ist.

Mit dem Molekulargewicht Mw ist das Massemittel der Molmasse gemeint, wie es beispielsweise mit einem handelsüblichen GPC (Gel-Permeations-Chromatograph) ermittelt werden kann (siehe z.B.: DE102005041953A1 Abs. [017]).

Bei dem Polymer 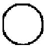 mit einem Molekulargewicht Mw von 1000 bis 50000, bevorzugt 1000 bis 20000 und besonders bevorzugt 4000 bis 20000 handelt es sich beispielsweise um Polyalkoxyalkylen, bevorzugt um ein Polyalkylenglykol, wie Polyethylenglykol, Polypropylenglykol oder Polybutylenglykol, insbesondere um Polypropylenglykol. In diesen Fällen ist p gleich 2 oder 3.

Bei einem Michael-Akzeptor handelt es sich z.B. um eine α,β-ungesättigte Carbonylverbindung, wie α,β-ungesättigte Aldehyde, Ketone oder Ester, α,β-ungesättigte Nitrile oder Carbonsäureamide. Beispiele hierfür sind Acrylsäure-C₁-C₈-Alkylester, Methacrylsäure-C₁-C₈-Alkylester (s. z.B. US-A-4,067,844) Maleinsäureester, Fumarsäureester (s. z.B. EP-A-0 596 360). Der Rest des Michael-Akzeptors "R" entspricht dann dem in β-Stellung gebundenen (gesättigten) Rest des Michael-Akzeptors.

Beispiele für die erfindungsgemäß einsetzbaren silanfunktionalisierten Präpolymere sind:
- Polypropylenglykol (PPG), dessen OH-Endgruppen umgesetzt wurden mit Allylchlorid wobei die sich daraus ergebenden terminalen Doppelbindungen hydrosilyliert wurden. Solche Präpolymere sind kommerziell unter der Bezeichnung "Kaneka Silyl SAX^{®}" (Kaneka Corp., Osaka, Japan) erhältlich und sind beispielsweise beschrieben in US 3971751, auf die hier ausdrücklich Bezug genommen wird;
- PPG, dessen OH-Endgruppen umgesetzt wurden mit Isocyanato-Silan. Solche Präpolymere sind kommerziell unter der Bezeichnung "Wacker Geniosil^{®} STP E" (Wacker Chemie AG, München, Deutschland) erhältlich und sind beispielsweise beschrieben in EP-A-1 535 940, auf die hier ausdrücklich Bezug genommen wird;
- PPG, dessen OH-Endgruppen umgesetzt wurden mit Diisocyanat und die sich daraus ergebenden terminalen Isocyanatgruppen mit Aminosilan umgesetzt wurden. Solche Präpolymere sind kommerziell unter der Bezeichnung "Bayer Desmoseal^{®} SXP" (Bayer AG, Leverkusen, Deutschland) erhältlich. Ihre Herstellung ist beispielsweise beschrieben in WO2011/069966 auf welche hier ausdrücklich Bezug genommen wird.
- Polymerketten mit seitenständigen Silangruppen (Formel (Il) mit p = 1 bis 100, bevorzugt 5 bis 10). Solche Präpolymere sind kommerziell unter der Bezeichnung "Evonik Tegopac^{®}" (EVONIK Tego Chemie GmbH, Essen, Deutschland) erhältlich und sind beispielsweise beschrieben in EP-A-2 093 244, auf die hier ausdrücklich Bezug genommen wird.

Weiterhin wird eine Zusammensetzung offenbart, enthaltend ein silanfunktionalisiertes Präpolymer und eine Verbindung der Formel (I), 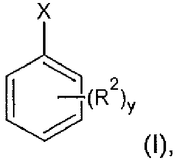 wobei X einen Substituenten -C(=O)-R¹ darstellt, und wobei R¹ ausgewählt ist aus der Gruppe bestehend aus -OH und Resten mit 1 bis 12 C-Atomen, und wobei y = 5 ist und die Reste R² gleich oder verschieden sind und ausgewählt sind aus der Gruppe bestehend aus -H, -OH und Resten mit 1 bis 12 C-Atomen.

Die Zusammensetzung enthält eine Verbindung der Formel (I), in der als Reste mit 1 bis 12 C-Atomen für R¹ und R² Reste in Betracht kommen, die ausgewählt sind aus der Gruppe umfassend substituierte und unsubstituierte, lineare und verzweigte C1 bis C12 Alkylgruppen, bevorzugt C1 bis C8 Alkylgruppen, besonders bevorzugt C1 bis C3 Alkylgruppen, substituierte und unsubstituierte, lineare und verzweigte C1 bis C12 Alkenylgruppen, bevorzugt C1 bis C8 Alkenylgruppen, besonders bevorzugt C1 bis C3 Alkenylgruppen, substituierte und unsubstituierte, lineare und verzweigte C1 bis C12 Alkynylgruppen, bevorzugt C1 bis C8 Alkynylgruppen, besonders bevorzugt C1 bis C3 Alkynylgruppen, substituierte und unsubstituierte, lineare und verzweigte C1 bis C12 Alkoxygruppen, bevorzugt C1 bis C8 Alkoxygruppen, besonders bevorzugt C1 bis C3 Alkoxygruppen, cyclische Alkylgruppen mit 5 bis 8 C-Atomen, bevorzugt 5 bis 6 C-Atomen, cyclische Alkenylreste mit 5 bis 8 C-Atomen, bevorzugt 5 bis 6 C-Atomen.

Es ist bevorzugt, dass mindestens einer der Reste R² eine OH-Gruppe ist. Besonders bevorzugt stellen mindestens zwei der Reste R² eine OH-Gruppe dar.

Weiterhin ist es bevorzugt, dass die Reste R² gleich oder verschieden sind und eine OH-Gruppe oder ein H-Atom darstellen. Folglich werden Zusammensetzungen offenbart enthaltend eine Verbindung der Formel (I), wobei einer der Reste R² eine OH-Gruppe darstellt und vier Reste R² ein H-Atom darstellen oder zwei der Reste R² eine OH-Gruppe darstellen und drei der Reste R² ein H-Atom darstellen oder drei der Reste R² eine OH-Gruppe darstellen und zwei der Reste R² ein H-Atom darstellen oder vier der Reste R² eine OH-Gruppe darstellt und einer der Reste R² ein H-Atom darstellt oder alle fünf Reste R² eine OH-Gruppe darstellen. Bevorzugt stellen zwei der Reste R² eine OH-Gruppe dar und drei der Reste R² stellen ein H-Atom dar oder drei der Reste R² stellen eine OH-Gruppe darstellen und zwei der Reste R² stellen ein H-Atom dar.

Bevorzugt stellt R¹ eine OH-Gruppe dar und mindestens einer der Reste R² stellt eine OH-Gruppe dar, wobei die übrigen Reste R² ein H-Atom darstellen. Besonders bevorzugt stellt R¹ eine OH-Gruppe dar, zwei der Reste R² stellen eine OH-Gruppe dar und drei der Reste R² stellen ein H-Atom dar.

Bevorzugte Verbindungen der Formel (I), die in der Zusammensetzung enthalten sind, sind 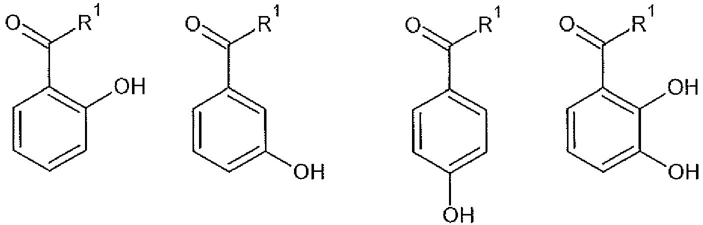 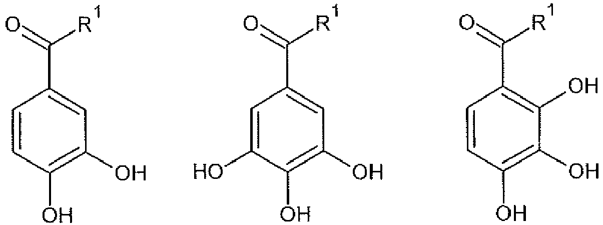 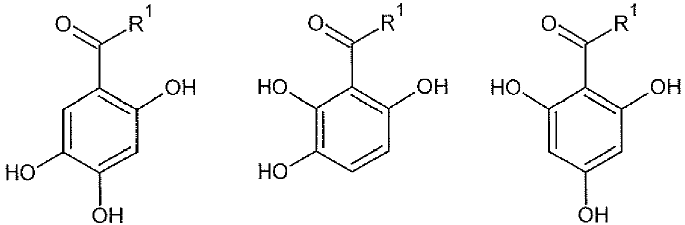 wobei R¹ bevorzugt eine OH-Gruppe, eine C1 bis C12 Alkylgruppe, bevorzugt eine C1 bis C8 Alkylgruppe, besonders bevorzugt eine C1 bis C3 Alkylgruppe, eine C1 bis C12 Alkoxygruppe, bevorzugt eine C1 bis C8 Alkoxygruppe, besonders bevorzugt eine C1 bis C3 Alkoxygruppe oder ein H-Atom darstellt, ganz besonders bevorzugt eine OH-Gruppe.

Es ist bevorzugt, dass wenn zwei der Reste R² eine OH-Gruppe darstellen, sich die mindestens zwei OH-Gruppen an benachbarten C-Atomen befinden.

Offenbart werden Zusammensetzungen enthaltend eine Verbindung der Formel (I), wobei zwei der Reste R² OH-Gruppen darstellen und sich die beiden OH-Gruppen an benachbarten C-Atomen befinden.

Wenn drei der Reste R² eine OH-Gruppe darstellen und zwei der Reste R² ein H-Atom darstellen, ist es bevorzugt, dass sich mindestens zwei OH-Gruppen an benachbarten C-Atomen befinden. Gemäß einer Ausführungsform, stellen drei der Reste R² eine OH-Gruppe dar, wobei sich alle drei OH-Gruppen an benachbarten C-Atomen befinden. Gemäß einer weiteren Ausführungsform, stellen drei der Reste R² eine OH-Gruppe dar, wobei sich nur zwei der drei OH-Gruppen an benachbarten C-Atomen befinden.

Besonders bevorzugte Verbindungen der Formel (I), die in der offenbarten Zusammensetzung enthalten sind, sind

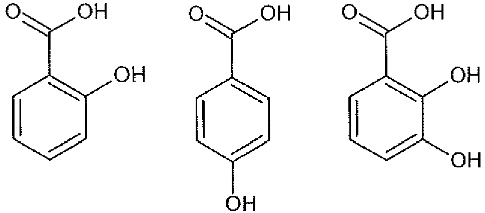

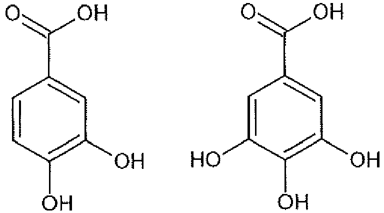

Die Zusammensetzung enthält die Verbindung der Formel (I) in einer Menge von 0,005 bis 0,5 Gew.-%, bevorzugt von 0,01 bis 0,5 Gew.-% besonders bevorzugt von 0,011 bis 0,4 Gew.-%.

Die Zusammensetzung kann übliche Additive wie Füllstoffe, Weichmacher, Trockenmittel, Haftvermittler, Farbpigmente (Farbstoffe), Antioxidationsmittel, UV-Stabilisatoren, Rheologieadditive, Verdünnungsmittel, Verdickungsmittel, Katalysatoren, Konservierungsmittel, etc. enthalten.

Als Füllstoffe eignen sich beispielsweise gemahlenes oder gefälltes Calciumcarbonat, Magnesiumcarbonat, Calciumsulfat, Bariumsulfat, Kaolin, Dolomit, Feldspat, Zeolith, Aluminiumhydroxid und Magnesiumhydroxid, etc., wobei diese Füllstoffe auch beispielsweise mit Silanen oder Fettsäuren oberflächenmodifiziert sein können. Es können eine oder mehrere verschiedene Füllstoffe verwendet werden. Füllstoffe werden gewöhnlich in Mengen von 0 bis 80 Gew.-%, bevorzugt 0 bis 60 Gew.-% zugegeben. Hierbei, wie auch in allen folgenden Gewichtsprozentangaben, beziehen sich diese auf die Masse der Gesamtrezeptur, sofern nichts anderes angegeben ist. Kommerziell erhältliche Füllstoffe sind beispielsweise Collafill^{®} 60 (Steinwerke Kraft, Deutschland) und Apyral^{®} 22 (Nabaltec, Deutschland).

Als Pigmente können sowohl anorganische Pigmente wie Ruß, Eisenoxid, Ultramarin, oder Zinkoxid, als auch organische Farbstoffe wie Anthrachinone, Acridine, Phthalocyanine, Indophenole, etc. eingesetzt werden. Es können ein oder mehrere verschiedene Pigmente oder Pigmentpräparationen verwendet werden. Pigmente, die die Oxidation fördern, wie z.B. Eisenoxide, dürfen nur in kleinen Mengen zugesetzt werden, ansonsten ist die Gesamtmenge an Pigment nicht kritisch. Die Pigmente werden gewöhnlich in Mengen von 0 bis 30 Gew.-%, bevorzugt 0 bis 20 Gew.-% zugegeben. Kommerziell erhältliche Pigmente und Pigmentpräparationen bzw. Farbstoffe sind beispielsweise Bayferrox^{®} (Lanxess, Deutschland).

Als Antioxidationsmittel bzw. UV-Stabilisatoren eignen sich beispielsweise sterisch gehinderte Phenole, Benzophenone, Benzotriazole, Oxalanilide, Phenyltriazine, etc. Solche Antioxidationsmittel bzw. UV-Stabilisatoren sind beispielsweise erhältlich unter den Bezeichnungen Irganox^{®} 1076, Tinuvin^{®} 292, Tinuvin^{®} 327, Tinuvin^{®} 770 (BASF, Deutschland). Es können eine oder mehrere verschiedene Antioxidationsmittel bzw. UV-Stabilisatoren verwendet werden. Die Gesamtmenge an Antioxidationsmittel bzw. UV-Stabilisator richtet sich nach dem geplanten Gebrauch. Antioxidationsmittel bzw. UV-Stabilisatoren werden gewöhnlich in Mengen von 0 bis 5 Gew.-%, bevorzugt 0 bis 2 Gew.-% zugegeben.

Als Trockenmittel eignen sich beispielsweise Alkylsilane, Aminosilane oder Vinylsilane wie Vinyltrimethoxysilan, Phenyltrimethoxysilan, Alkyltrimethoxysilane oder Alkyltriethoxysilane. Es können eine oder mehrere verschiedene Trockenmittel verwendet werden. Die Gesamtmenge an Trockenmittel ist nicht kritisch, sofern der Wassergehalt der anderen Rohstoffe entfernt wird. Trockenmittel werden gewöhnlich in Mengen von 0,1 bis 10 Gew.-%, bevorzugt 0,1 bis 5 Gew.-% zugegeben. Kommerziell erhältliche Trockenmittel sind beispielsweise Dynasylan^{®} VTMO, Dynasylan^{®} OCTEO, Dynasylan^{®} AMMO (Evonik, Deutschland).

Als Haftvermittler eignen sich beispielsweise Aminosilane wie Gamma-Amino-propyl-Trimethoxysilan oder Epoxysilane. Auch oligomere Silane, die jedoch (teilweise) Amino- oder Epoxy-funktionell sein müssen, sind geeignet. Es können eine oder mehrere verschiedene Haftvermittler verwendet werden. Die Gesamtmenge an Haftvermittler ist nicht kritisch. Haftvermittler werden gewöhnlich in Mengen von 0,1 bis 10 Gew.-%, bevorzugt 0,1 bis 5 Gew.-% zugegeben. Kommerziell erhältliche Haftvermittler sind beispielsweise Dynasylan^{®} AMMO, Dynasylan^{®} GLYMO, Dynasylan^{®} 1146 (Oligomer) (Evonik, Deutschland).

Als Rheologieadditiv eignen sich beispielsweise (hydrophobe) pyrogene Kieselsäuren, gefällte Kieselsäuren, Schichtsilikate, Amidwachse, Rizinussölderivate, Celulloseether, Polyurethan-, Polyamid- oder Acrylatverdicker, etc. Es können eine oder mehrere verschiedene Rheologieadditive verwendet werden. Die Gesamtmenge an Rheologieadditiv ist nicht kritisch. Rheologieadditive werden gewöhnlich in Mengen von 0 bis 15 Gew.-%, bevorzugt 0 bis 10 Gew.-% zugegeben. Kommerziell erhältliche Rheologieadditive sind beispielsweise Cab-O-Sil^{®} TS720, Cab-O-Sil^{®} LM 150 (Cabot, Deutschland), Aerosil^{®} R208, (Evonik, Deutschland), Wacker H18 (Wacker, Deutschland).

Als Weichmacher oder Verdünnungsmittel können Ester, wie Phthalate bzw. Cyclohexandicarbonsäuren, Citrate, Adipate oder Polyether eingesetzt werden. Weiterhin eignen sich beispielsweise Glycerin, Polyole und Polyether, Benzoate, etc. Es können ein oder mehrere verschiedene Verdünnungsmittel verwendet werden. Die Gesamtmenge an Verdünnungsmittel ist nicht kritisch. Verdünnungsmittel werden gewöhnlich in Mengen von 0 bis 50 Gew.-%, bevorzugt 0 bis 30 Gew.-% zugegeben. Kommerziell erhältliche Verdünnungsmittel sind beispielsweise Palatinol N, Palatinol 10 P oder Hexamoll DINCH (BASF, Deutschland), Acclaim Polyol 2200 (Covestro, Deutschland).

Als Katalysatoren für die Vernetzungs- und Aushärtungsreaktion, eignen sich beispielsweise Bis(ethyl-acetoacetato)bis(isobutan-1-olato)titan, Titan-(IV)-isopropanolat, Titan-(IV)-acetylacetonat, Eisen-(III)-acetylacetonat, Aluminiumtriisopropanolat, Dibutylzinndilaurat, Dioctylzinndilaurat, Amidine oder Amidin-Derivate, 1,4-Diazabicyclo[2.2.2]octan, 1,8-Diazabicyclo[5.4.0]-undecen-7 (DBU), 1,5-Diazabicyclo[4.3.0]-nonen-5 (DBN), Guanindin, Guanidin-Derivate wie beispielsweise 1,1,3,3-Tetramethylguanidin, Essigsäure, Essigsäure-Derivate, Methansulfonsäure, p-Toluolsulfonsäure, etc. Es können ein oder mehrere verschiedene Katalysatoren verwendet werden. Die Gesamtmenge an Katalysator ist nicht kritisch. Katalysatoren werden gewöhnlich in Mengen von 0 bis 2 Gew.-%, bevorzugt 0 bis 1 Gew.-% zugegeben.

Die offenbarte Zusammensetzung findet Anwendung in Klebstoffen, Dichtstoffen, Beschichtungen und/oder Grundierungen.

Ferner wird ein Verfahren zur Herstellung der Zusammensetzungen offenbart, umfassend:
Mischen des silanfunktionalisierten Präpolymers der Formel (II) mit einer Verbindung der Formel (I).

Das Verfahren zur Herstellung der offenbarten Zusammensetzung umfasst weiterhin die folgenden Schritte:
- der Weichmacher wird in einem Mischer vorgelegt,
- das Trockenmittel wird zugegeben und dabei untergemischt,
- die Verbindung der Formel (I) wird zugegeben;
- der Füllstoff wird zugegeben, eingemischt und die erhaltene Mischung wird bevorzugt unter statischem Vakuum von 1 bis 500 hPa auf eine Temperatur von 40 bis 100 °C gebracht.

Die erfolgte Trocknung kann durch eine Karl-Fischer-Titration geprüft werden. Dann erfolgt:
- die Zugabe und das Einmischen des Präpolymers zweckmäßigerweise unter Schutzgas (N₂, Taupunkt < -20 °C),
- die Zugabe eines Antioxidationsmittels,
- Verdicker werden zugegeben und unter Schutzgas ggf. bei erhöhter Temperatur aufgeschlossen,
- Pyrogene Kieselsäure wird zugegeben und unter Schutzgas untergemischt
- Optional wird ein weiteres Trockenmittel zugegeben
- der Haftvermittler wird zugegeben und untergemischt
- der/die Katalysatoren wird/werden zugeben und untergemischt.

Die Zugabe des Präpolymers, des Antioxidationsmittels, des Verdickers, der pyrogenen Kieselsäure, des Haftvermittlers und der Katalysatoren sowie die optionale Zugabe eines weiteren Trockenmittels kann alternativ zusammen in einem Schritt erfolgen. Zum Schluss wird die Mischung (Gesamtrezeptur) unter Vakuum entgast.

Alternativ kann das Verfahren auch ohne die Verwendung eines Weichmachers erfolgen.

Das Verfahren zur Herstellung der offenbarten Zusammensetzung umfasst in diesem Fall die folgenden Schritte:
- das Präpolymer wird in einem Mischer vorgelegt
- das Trockenmittel wird zugegeben
- die Verbindung der Formel (I) wird zugegeben;
- der Füllstoff wird zugegeben, eingemischt und die Mischung wird bevorzugt unter statischem Vakuum von 1 bis 500 hPa auf eine Temperatur von 40 bis 100 °C gebracht.
- die Zugabe eines Antioxidationsmittels,
- Verdicker werden zugegeben und unter Schutzgas ggf. bei erhöhter Temperatur aufgeschlossen,
- Pyrogene Kieselsäure wird zugegeben und unter Schutzgas untergemischt
- Optional wird ein weiteres Trockenmittel zugegeben
- der Haftvermittler wird zugegeben und untergemischt
- der/die Katalysatoren wird/werden zugeben und untergemischt.

Die Zugabe des Präpolymers, des Antioxidationsmittels, des Verdickers, der pyrogenen Kieselsäure, des Haftvermittlers und der Katalysatoren sowie die optionale Zugabe eines weiteren Trockenmittels kann alternative zusammen in einem Schritt erfolgen. Zum Schluss wird die Mischung (Gesamtrezeptur) unter Vakuum entgast.

### Beispiele

### Bestimmung der Zugscherfestigkeit

Die Zugscherfestigkeit wurde gemäß DIN EN 14293, Kapitel 4.7, bestimmt.

### Herstellung der Zusammensetzungen

Für die Herstellung der untersuchten Zusammensetzungen wurde wie folgt vorgegangen. Es wurden 16,31 Gew.-Teile Weichmacher 1,2-Cyclohexandicarbonsäurediisononylester (Hexamol DINCH) in einem Mischer vorgelegt und 1,65 Gew.-Teile Trockenmittel (Vinyltrimethoxysilan, Dynasylan VTMO) zugegeben und dabei untergemischt. Anschließend wurden 0,02 Gew.-Teile der Verbindung (I) zugegeben. Dann wurden 57,68 Gew.-Teile Füllstoff (Calciumcarbonat, Collafill^{®} 60) eingemischt und die Mischung bei ca. 500 hPa auf eine Temperatur von 70 °C gebracht. Die erfolgte Trocknung wurde durch eine Karl-Fischer-Titration geprüft. Dann erfolgte die Zugabe und das Einmischen von 20,37 Gew.-Teilen Präpolymer (ein gamma-Silan basierend auf PPG, Desmoseal^{®} S XP 2458) unter Stickstoff. Anschließend wurden 0,31 Gew.-Teile Antioxidationsmittel (3,3',3",5,5',5"-hexa-tert-butyl-a,a',a"-(mesitylen-2,4,6-triyl)tri-p-cresol, Irganox 1330), 0,55 Gew.-Teile Verdicker (Amidwachs, Crayvallac SLX) und 0,95 Gew.-Teile Verdicker (Pyrogene Kieselsäure, Aerosil R208) zugegeben und unter Stickstoff untergerührt. Dann wurden 1,09 Gew.-Teile Trocknungsmittel und 0,96 Gew.-Teile Haftvermittler (Aminopropyltrimethoxysilan, Dynasylan AMMO) zugegeben und untergemischt. Schließlich erfolgte die Zugabe von 0,03 Gew.-Teilen Titankatalysator (Bis(ethyl-acetoaceto-O1',O3)bis(2-methylpropan-1-olato)titan, Tyzor IBAY) und 0,08 Gew.-Teilen Amin-Katalysator (DBU). Die Mischung wurde abschließend unter Vakuum entgast.

**Tabelle 1: Vergleich der Zugscherfestigkeit der unterschiedlichen Zusammensetzungen**

| Verbindung (I) | Zugscherfestigkeit (N/mm²) nach einem Tag | Zugscherfestigkeit (N/mm²) nach 3 Tagen |
|---|---|---|
| Keine Verbindung (I) | 1,60 | 2,12 |
| Gallussäure | 2,32 | 2,69 |
| 3,4-Dihydroxybenzoesäure | 1,92 | 2,35 |
| 2,3- Dihydroxybenzoesäure | 2,02 | 2,46 |

Die Werte in Tabelle 1 zeigen, dass die erfindungsgemäßen Zusammensetzungen im Vergleich zu der Zusammensetzung ohne Verbindung (I) eine höhere Zugscherfestigkeit aufweisen. Die Vergleichszusammensetzung, die keine Verbindung der Formel (I) enthält, weist nach 3 Tagen eine Zugscherfestigkeit von 2,12 N/mm² auf. Die in den Beispielen untersuchten Zusammensetzungen, die eine Verbindung der Formel (I) umfassen, weisen eine bis zu 32 % höhere Zugscherfestigkeit auf.

## Patentansprüche

1. Verwendung der Verbindung der Formel (I) 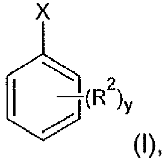 zur Verbesserung der Zugscherfestigkeit von ausgehärteten Zusammensetzungen, basierend auf silanmodifizierten Präpolymeren,
wobei X ausgewählt ist aus der Gruppe bestehend aus -OH, -H, Resten mit 1 bis 12 C-Atomen, und einem Substituenten -C(=O)-R¹, wobei R¹ ausgewählt ist aus der Gruppe bestehend aus -OH, und Resten mit 1 bis 25 C-Atomen, und
wobei y = 5 ist und die Reste R² gleich oder verschieden sind und ausgewählt sind aus der Gruppe bestehend aus -H, -OH und Resten mit 1 bis 12 C-Atomen.

2. Verwendung nach Anspruch 1, **dadurch gekennzeichnet, dass** mindestens einer der Reste R² -OH ist.

3. Verwendung nach Anspruch 1, **dadurch gekennzeichnet, dass** zwei der Reste R² -OH sind und drei der Reste R²-H sind.

4. Verwendung nach Anspruch 1, **dadurch gekennzeichnet, dass** drei der Reste R² -OH sind, die sich an benachbarten C-Atomen befinden.

5. Verwendung nach Anspruch 1, **dadurch gekennzeichnet, dass** R¹ -OH ist und mindestens einer der Reste R² -OH ist.

6. Verwendung nach Anspruch 1, **dadurch gekennzeichnet, dass** R¹ -OH ist, zwei der Reste R² -OH sind und sich an benachbarten C-Atomen befinden und drei der Reste R² -H sind.

7. Verwendung nach Anspruch 1, **dadurch gekennzeichnet, dass** die Verbindung der Formel (I) in einer Menge von 0,005 bis 0,5 Gew.-%, bevorzugt von 0,01 bis 0,5 Gew.-% besonders bevorzugt von 0,011 bis 0,4 Gew.-% verwendet wird.

## Claims

1. Use of the compound of the formula (I) 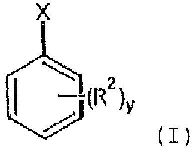 to improve the tensile shear strength of cured compositions based on silane-modified prepolymers,
where X is selected from the group consisting of -OH, -H, radicals containing 1 to 12 carbon atoms, and a substituent -C(=O)R¹, where R¹ is selected from the group consisting of -OH, and radicals containing 1 to 25 carbon atoms, and
where y = 5 and the radicals R² are identical or different and selected from the group consisting of -H, -OH and radicals containing 1 to 12 carbon atoms.

2. Use according to Claim 1, **characterized in that** at least one of the radicals R² is -OH.

3. Use according to Claim 1, **characterized in that** two of the radicals R² are -OH and three of the radicals R² are -H.

4. Use according to Claim 1, **characterized in that** three of the radicals R² are -OH, which are located on adjacent carbon atoms.

5. Use according to Claim 1, **characterized in that** R¹ is -OH and at least one of the radicals R² is -OH.

6. Use according to Claim 1, **characterized in that** R¹ is -OH, two of the radicals R² are -OH and are located on adjacent carbon atoms and three of the radicals R² are -H.

7. Use according to Claim 1, **characterized in that** the compound of the formula (I) is used in an amount of from 0.005% to 0.5% by weight, preferably from 0.01% to 0.5% by weight, more preferably from 0.011% to 0.4% by weight.

## Revendications

1. Utilisation du composé de formule (I) 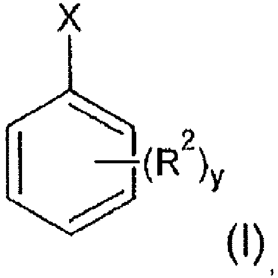 pour améliorer la résistance au cisaillement en traction de compositions durcies à base de prépolymères modifiés au silane,
où X est choisi dans le groupe constitué de -OH, de -H, des motifs ayant de 1 à 12 atomes de carbone, et d'un substituant -C(=O)-R¹, où R¹ est choisi dans le groupe constitué de -OH et des motifs ayant de 1 à 25 atomes de carbone, et
où y = 5 et les motifs R² sont égaux ou différents et sont choisis dans le groupe constitué de -H, de -OH et des motifs ayant de 1 à 12 atomes de carbone.

2. Utilisation selon la revendication 1, **caractérisée en ce qu'**au moins un des motifs R² est -OH.

3. Utilisation selon la revendication 1, **caractérisée en ce que** deux des motifs R² sont -OH et trois des motifs R² sont -H.

4. Utilisation selon la revendication 1, **caractérisée en ce que** trois des motifs R² sont -OH, situés sur des atomes de carbone adjacents.

5. Utilisation selon la revendication 1, **caractérisée en ce que** R¹ est -OH et au moins un des motifs R² est -OH.

6. Utilisation selon la revendication 1, **caractérisée en ce que** R¹ est -OH, deux des motifs R² sont -OH et sont situés sur des atomes de carbone adjacents, et trois des motifs R² sont -H.

7. Utilisation selon la revendication 1, **caractérisée en ce que** le composé de formule (I) est utilisé dans une quantité de 0,005 à 0,5 % en poids, de préférence de 0,01 à 0,5 % en poids, de manière particulièrement préférée de 0,011 à 0,4 % en poids.
